# EUROPEAN PATENT SPECIFICATION

(11) **EP 2 725 948 B1**
(45) Date of publication and mention of the grant of the patent: **10.02.2016**
(21) Application number: 12740220.4
(22) Date of filing: 25.06.2012
(51) Int. Cl.: A47J 27/21

(54) **ELECTRICALLY HEATED VESSEL**
ELEKTRISCH BEHEIZTES GEFÄSS
RÉCIPIENT CHAUFFÉ ÉLECTRIQUEMENT

(30) Priority: 01.07.2011 EP 11172299
(43) Date of publication of application: 07.05.2014
(73) Proprietor: Koninklijke Philips N.V., 5656 AE Eindhoven (NL)
(72) Inventor: NIJHOFF, Alex, Reinier, NL-5656 AE Eindhoven (NL)
(74) Representative: Coops, Peter
(86) International application number: PCT/IB2012/053186
(87) International publication number: WO 2013/005128

(56) References cited:
- EP-A1- 1 504 703
- EP-A2- 1 314 385
- US-A- 5 169 161
- US-A- 6 161 841

## Description

### FIELD OF THE INVENTION

The present invention relates to an electrically heated vessel comprising a container space for containing liquid and a heating element for supplying heat to the container space, which comprises a seal positioned inside the vessel for protecting a portion of the vessel which is present at a side of the heating element facing away from the container space from penetration of liquid from the container space. The seal has an annular shape, and comprises at least one resilient circumferential projection extending outwardly.

### BACKGROUND OF THE INVENTION

An electrically heated vessel is a well-known and widely used article, and is suitable to be applied in situations in which there is a need for heating a liquid such as water or milk. Practical examples of an electrically heated vessel include kettles, hot water jugs, steamers and milk frothers. In general, an electrically heated vessel comprises a container space for the purpose of containing liquid to be heated, and a heating element for supplying heat to the container space. In many cases, the type of heating element is a so-called planar heating element, i.e. a heating element comprising a plate and heat generating means arranged at a side of the plate which faces away from the container space, wherein the heat generating means may comprise a wire wound resistance heater, or a resistance heating track, for example.

The heating element is normally arranged at a side of the electrically heated vessel which is a bottom side of the vessel in a normal orientation of the vessel, i.e. an orientation associated with the heating process. In such a case, a side of the plate of the heating element which faces the container space actually constitutes a bottom of the container space. For the purpose of avoiding leakage of liquid from the container space to the other side of the heating element, a seal is applied. A practical type of seal is known from EP 1 314 385. This seal is a resilient seal which is provided around the heating element, and which seals the periphery thereof with respect to a wall of the vessel. Particularly, the seal has one or more resilient circumferential projections, which are denoted as fingers or fins in the specification of EP 1 314 385, which extend outwardly, and which contact the vessel wall.

The known seal is especially suitable to be used with planar heating elements. In a situation in which the size of the plate of a heating element is chosen such as to substantially match the size of the vessel at its mounting position, the seal surrounds a circumferential portion of the plate extending more or less in a downward direction. When the size of the plate is chosen such as to be smaller, an annular mounting flange may be used at a position between the plate and the seal. Hence, in such a situation, the seal surrounds a circumferential portion of the flange extending in a downward direction, wherein it is possible for the seal to be integral with the flange if so desired.

The seal used with the heating element or the combination of the heating element and a mounting flange as mentioned has one or more relatively thin resilient radially-extending circumferential projections, as noted earlier, which deform to take the shape of the vessel wall against which they are fitted, and which absorb a wide range of size and shape variations of the vessel wall, which is normally made of plastic. Also, there is a safety aspect to the application of the seal, which resides in the fact that there is no need for the heating element to contact the vessel wall or other objects associated with the vessel wall than the seal, so that the risk of heat damage of the vessel wall is reduced. Heat damage as mentioned may otherwise occur in a situation of dry boil, for example.

The seal may comprise an elastomeric thermally insulating material such as silicone rubber, and may include a locating groove or other formation for reception and positive accommodation of a circumferential part of the heating element.

It appears in practice that even though the seal is a resilient seal and contacts the heating element at an inner side and the vessel wall at an outer side, it is still possible for leakage to occur, wherein liquid passes the seal and reaches the side of the heating element where the actual heat generating means are arranged. This is a situation which is not acceptable, as this may result in rust of metal components which are present outside of the container space, and/or may be dangerous as soon as the liquid reaches electrical components.

### SUMMARY OF THE INVENTION

It is an object of the present invention to provide an improved electrically heated vessel like that known from EP 1 314 385, yielding better results in avoiding leakage.

The present invention is based on the insight that in an electrically heated vessel known from EP 1 314 385, leakage may occur as a result of a practical out of roundness of the vessel wall, i.e. as a result of a practical radial deviation of the shape of the vessel wall from ideal roundness. It is found that out of roundness of the vessel wall causes high pressures to be exerted on the seal, to such an extent that permanent deformation of the seal may take place, wherein it may be possible for lime scale to penetrate between the seal and the vessel wall.

In general, the electrically heated vessel according to the present invention comprises a seal of the same design as the seal known from EP 1 314 385. However, a notable difference resides in the fact that according to the present invention, at least one discontinuity is present in the surface of the projection of the seal. In the known seal, the surface of the projection has a smooth, continuous appearance, but this is not the case in the seal according to the present invention. By having a discontinuity such as a notch or a bulge, it is possible for the projection to have a function in hindering a migration of scale in the area where the seal is present and avoiding penetration of scale between the seal and the vessel wall. It will be understood that normal, practical phenomena like surface roughness are not to be understood as being included in the term "discontinuity" as used here, but that the term is intended to cover possibilities which are different from the prior art in such a way that at least one deviation from a generally smooth surface can actually be seen in the surface of the projection.

In a practical embodiment of the electrically heated vessel according to the present invention, the projection of the seal may have at least one bulged area. In such as case, it is possible for the bulged area to be annular, thereby forming a circumferential rib on the projection. In that way, the bulged area can be effective along the entire circumference of the seal. The number of bulged areas may be at least two, wherein the bulged areas can be arranged such as to form concentric circumferential ribs on the projection in case they are chosen to be annular. As far as the number of projections is concerned, it is noted that this is at least one, but that it is preferred to have at least two projections for sufficient and reliable sealing capacity.

In the case of the electrically heated vessel known from EP 1 314 385, the seal also appears to be possible for scale to penetrate between the seal and the heating element, so that leakage may also occur at that position. In order to avoid this problem, it is proposed to equip the seal with a tapering area at its inside surface, and to let the seal comprise resilient material at the position of the tapering area. When the seal is put in place around the heating element, the tapering area is gradually compressed, and additional pressure is built up between the seal and the heating element. Hence, the connection of the seal to the heating element can be tighter than in a situation without the tapering area. For sake of completeness, in respect of the material of the seal, it is noted that the seal may be made entirely of resilient material, and that most effective functioning of the seal can be achieved when this is the case.

The above-described and other aspects of the present invention will be apparent from and elucidated with reference to the following detailed description.

### BRIEF DESCRIPTION OF THE DRAWINGS

The present invention will now be explained in greater detail with reference to the figures, in which equal or similar parts are indicated by the same reference signs, and in which:
Figure 1 diagrammatically shows a sectional view of an electrically heated vessel comprising a container space for containing liquid, a heating element for supplying heat to the container space, and a seal for protecting a bottom portion of the vessel from penetration of liquid from the container space, wherein most other components of the vessel are omitted for sake of clarity;
Figure 2 shows a detail A of Figure 1; and
Figure 3 shows a sectional view of the seal in an unmounted condition.

### DETAILED DESCRIPTION OF EMBODIMENTS

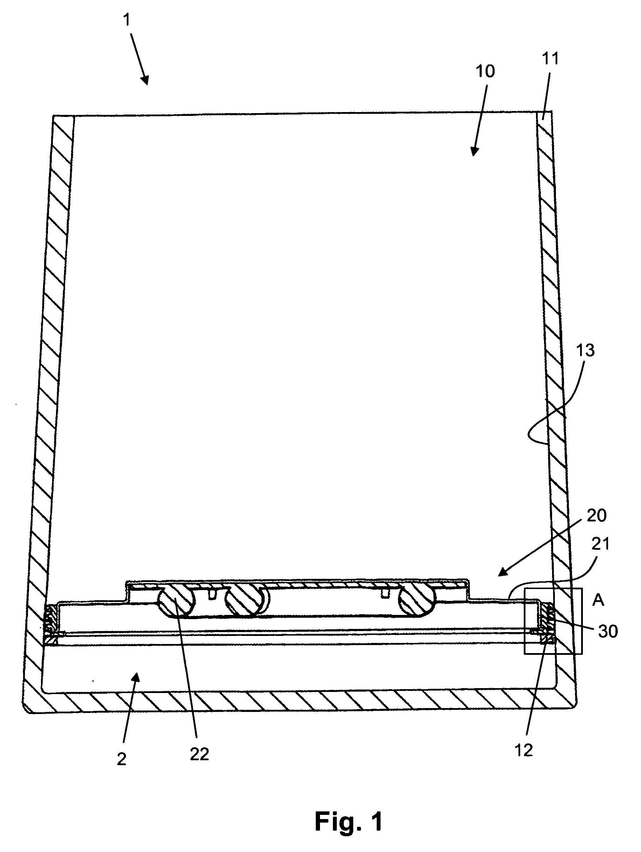

Figure 1 diagrammatically shows a sectional view of an electrically heated vessel 1 comprising a container space 10 for containing liquid, a heating element 20 for supplying heat to the container space 10, and a seal 30 for protecting a portion 2 of the vessel 1 which is present at a side of the heating element 20 facing away from the container space 10 from penetration of liquid from the container space 10. In figure 1, the vessel 1 is shown in a normal, upright position, in which an open side of the vessel 1 for receiving liquid from a source such as a tap is up. Furthermore, in figure 1, only the components of the electrically heated vessel 1 which are relevant in the context of the present invention are shown, which is justified in view of the fact that such a vessel 1 is a well-known and widely used article.

Among other things, it is known for the vessel 1 to be part of a cordless electrical water heater which furthermore comprises a base for supporting the vessel 1 and supplying the heating element 20 with power when the vessel 1 is put in place on the base. Also, it is known for the vessel 1 to be provided with a lid or other suitable cover at a top side, and to comprise a handle or the like for allowing a user to easily take hold of the vessel 1 if so desired. In a bottom portion 2 of the vessel 1, among other things, electrical connectors are present for cooperating with connectors of the base as mentioned earlier. Nevertheless, the base and the other components as mentioned are not shown in figure 1. The only component which is shown besides a delimiting wall 11 of the vessel 1, the heating element 20 and the seal 30 is a circular clip 12 for securing the heating element 20 and the seal 30 to the vessel 1. The functionality of the clip 12 may easily be realized on the basis of the fact that an inner surface 13 of the vessel wall 11 can be provided with suitable slots for accommodating the clip 12, for example. It will be understood that, within the scope of the present invention, it is possible to use other means for supporting the heating element 20 and the seal 30 inside the vessel 1. Also, it will be understood that within the scope of the present invention, it is not essential for the vessel 1 to be part of a cordless water heater, or to be shaped in a generally known way with a cover or a handle.

Normally, the vessel 1 has a tapering shape, wherein a diameter of the vessel 1 is larger at a bottom portion than at a top portion thereof. Also, it is common use for the vessel 1 to have an annular cross-section with a circular outer circumference. The heating element 20 as shown in figure 1 is a planar heating element 20 which comprises a heating plate 21 and a tube-shaped resistance heater 22 arranged at a bottom side of the heating plate 21. The heating plate 21 has a circular appearance, and is dimensioned such as to fit inside the vessel 1 with only small circumferential play. A suitable material of the heating plate 21 is aluminum. It is noted that other suitable means may be used instead of the heater 22 as shown. For example, it is possible to have a resistance heating track.

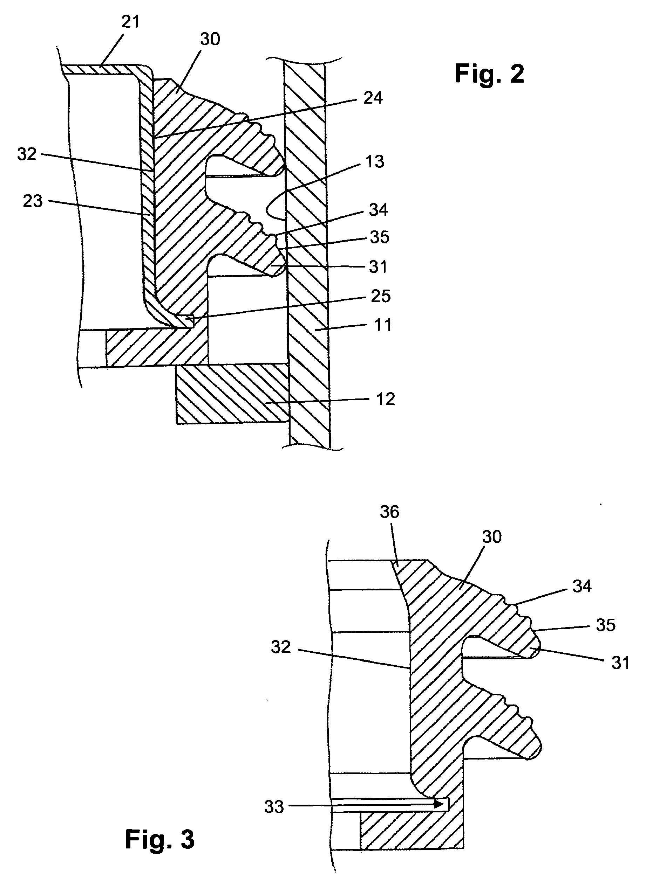

The heating plate 21 as shown has a stepped appearance. At a bottom side, a portion 23 extending more or less parallel to the vessel wall 11 is present, as can be clearly seen in the detail of figure 1 as shown in figure 2, which has an outer surface 24 and an outwardly bent bottom rim 25. Basically, the vessel 1 according to the present invention can be the same as the vessel known from EP 1 314 385, including the same components with the exception of the seal 30, which is of another, improved design as will be explained in the following with reference to figures 2 and 3 in which the seal 30 according to the present invention is shown in detail. Furthermore, the exact way in which the seal 30 is mounted at a position between the outer surface 24 of the bottom portion 23 of the heating plate 21 and the inner surface 13 of the vessel wall 11 will become apparent with reference to figure 2.

The seal 30 has an annular appearance, and is made of a resilient material such as rubber. For sake of completeness, it is noted that the term "annular" should be understood such as to mean that the seal 30 is shaped like a ring, wherein the inner circumference and the outer circumference of the ring may have any suitable shape, and do not necessarily need to be circular, and wherein rims which are at the bottom and the top as seen in an axial direction of the ring do not necessarily need to be in planes intersecting a longitudinal axis of the ring in a perpendicular fashion, but may be in planes having a slanting orientation and/or may have a corrugated appearance, for example. In the case of the seal 30, among other things, it depends on the shape of the vessel wall 11 which shape is most appropriate, as long as the seal 30 is capable of performing the sealing function as desired.

Like the seal known from EP 1 314 385, the seal 30 according to the present invention comprises at least one resilient circumferential projection 31 extending outwardly. In the shown example, two projections 31 are provided, which both serve for contacting the inner surface 13 of the vessel wall 11 in a mounted condition of the seal 30. Furthermore, an inside surface 32 of the seal 30 serves for contacting the outer surface 24 of the bottom portion 23 of the heating plate 21 in the mounted condition. In this way, as a result of the fact that the seal 30 has resilient properties and is a continuous component which contacts both the vessel wall 11 and the heating plate 21 when mounted inside the vessel 1, it is achieved that leakage of liquid from the container space 10 to a space 2 underneath the heating plate 21 cannot occur, as the seal 30 totally blocks liquid from passing through a space between the bottom portion 23 of the heating plate 21 and the vessel wall 11 which would be present when the seal 30 would not be applied.

The seal 30 has a groove 33 for accommodating the bottom rim 25 of the heating plate 21. In this way, the groove 33 has a function in determining the correct position of the seal 30 with respect to the heating plate 21. For sake of completeness, it is noted that within the scope of the present invention, it is not essential for the seal 30 to have a groove 33 as shown, and that a person skilled in the art can think of many ways of ensuring correct positioning of the seal 30.

Two particular aspects of the seal 30 according to the present invention will now be described. In the first place, it is noted that the projections 31 of the seal 30 are provided with bulged areas 34. Advantageously, the bulged areas 34 are annular, thereby forming circumferential ribs on the projections 31, wherein a concentric arrangement of the ribs may be realized. In the shown example, the number of bulged areas 34 per projection 31 is three, but it is also possible to have another number of bulged areas 34. Also, it is possible that only one projection 31 is equipped with at least one bulged area 34. In any case, according to the present invention, there is a discontinuity 34 in a surface 35 of at least one projection 31 of the seal 30, which may be a bulged area 34 as shown, but which may also be a notch, for example. It is preferred for the discontinuity 34 as mentioned to be oriented such as to face the container space 10, as is the case in the shown example.

The bulged areas 34 as mentioned in the foregoing have a function in avoiding penetration of lime scale between the seal 30 and the vessel wall 11. It is a well-known fact that scale is formed over time when an electrically heated vessel 1 is used. According to an insight underlying the present invention, leakage of liquid from the container space 11 in a downward direction across the seal 30 can occur when scale particles end up at a position between the seal 30 and the vessel wall 11, and also when scale particles end up at a position between the seal 30 and the heating element 20. The bulged areas 34 stop scale particles from actually reaching a position in which they are stuck between the seal 30 and the vessel wall 11, and in which they provide passages where liquid may penetrate.

For avoiding penetration of lime scale between the seal 30 and the heating element 20, the seal 30 according to the present invention is provided with a tapering area 36 at its inside surface 32. In the shown example, the tapering area 36 as mentioned is present at a top side of the seal 30, as can be seen in figure 3. When the seal 30 is in the mounted condition, the tapering area 36 is compressed, and additional pressure is obtained at the position of the tapering area 36, so that a tighter fit of the seal 30 to the heating element 20 is realized in comparison with a situation without the tapering area 36.

On the basis of the presence of the bulged areas 34 as discontinuities of the surface 35 of the projections 31 of the seal 30 and the presence of the tapering area 36 of the inside surface 32 of the seal 30, an improved and durable sealing function of the seal 30 is realized, which is not easily disturbed by penetration of lime scale as is the case with conventional, comparable seals, such as the seal known from EP 1 314 385. For sake of completeness, it is noted that the aspect of having a discontinuity 34 in the surface 35 of a projection 31 and the aspect of having a tapering area 36 at the inside surface 32 are solutions to the leakage problem which can be applied independently, although it is understood that a combination of these aspects yields favorable results, as such a combination has effect at both an outer circumference of the seal 30 and an inner circumference of the seal 30.

It will be clear to a person skilled in the art that the scope of the present invention is not limited to the examples discussed in the foregoing, but that several amendments and modifications thereof are possible without deviating from the scope of the present invention as defined in the attached claims. While the present invention has been illustrated and described in detail in the figures and the description, such illustration and description are to be considered illustrative or exemplary only, and not restrictive. The present invention is not limited to the disclosed embodiments.

The present invention can be summarized as follows. A seal 30 for use in an electrically heated vessel 1 comprising a container space 10 for containing liquid and a heating element 20 for supplying heat to the container space 10 is intended to be used at a position inside the vessel 1 for protecting a portion 2 of the vessel 1 which is present at a side of the heating element 20 facing away from the container space 10 from penetration of liquid from the container space 10. To this end, the seal 30 has an annular shape and comprises at least one resilient circumferential projection 31 extending outwardly. The projection 31 has at least one discontinuity 34 in its surface 35, whereby it is possible to stop scale particles from penetrating between the seal 30 and an inner surface 13 of the vessel 1, which may otherwise occur and lead to leakage problems. Furthermore, it is preferred if an inside surface 32 of the seal 30 is provided with a tapering area 36 having resilient properties, so that a sufficiently tight fit of the seal 30 to the heating element 20 can be realized, which also leads to a reduction of the risk of leakage across the seal 30.

## Claims

1. Electrically heated vessel (1), comprising a container space (10) for containing liquid, a heating element (20) for supplying heat to the container space (10), and a seal (30), which seal (30) is positioned inside the vessel (1) for protecting a portion (2) of the vessel (1) which is present at a side of the heating element (20) facing away from the container space (10) from penetration of liquid from the container space (10), and which
seal (30) has an annular shape, and comprises at least one resilient circumferential projection (31) extending outwardly, **characterised in that** the projection (31) has at least one discontinuity (34) in its surface (35).

2. Electrically heated vessel (1) according to claim 1, wherein the seal (30) is provided around the heating element (20), and seals an outer periphery (24) of the heating element (20) with respect to an inner surface (13) of the vessel (1) by contacting the inner surface (13) through the projection (31).

3. Electrically heated vessel (1) according to claim 1, wherein the projection (31) has at least one bulged area (34).

4. Electrically heated vessel (1) according to claim 3, wherein the bulged area (34) is annular, thereby forming a circumferential rib on the projection (31).

5. Electrically heated vessel (1) according to claim 4, wherein the number of bulged areas (34) is at least two.

6. Electrically heated vessel (1) according to claim 5, wherein the bulged areas (34) are annular, thereby forming concentric circumferential ribs on the projection (31).

7. Electrically heated vessel (1) according to claim 1, wherein the number of projections (31) is at least two.

8. Electrically heated vessel (1) according to claim 1, wherein the seal (30) has a tapering area (36) at its inside surface (32), and wherein the seal (30) comprises resilient material at the position of the tapering area (36).

## Patentansprüche

1. Elektrisch beheiztes Gefäß (1), einen Behälterraum (10) zum Beinhalten von Flüssigkeit umfassend, ein Heizelement (20) zur Wärmeversorgung des Behälterraums (10), und eine Dichtung (30), welche (30) innerhalb des Gefäßes (1) positioniert ist, um einen Abschnitt (2) des Gefäßes (1) vor dem Eindringen von Flüssigkeit aus dem Behälterraum (10) zu schützen, der sich an einer vom Behälterraum (10) abgewandten Seite des Heizelements (20) befindet, und welche (30) eine Ringform aufweist, und zumindest eine umlaufende elastische Auskragung (31) umfasst, die sich nach außen erstreckt, **dadurch gekennzeichnet, dass** die Auskragung (31) an ihrer Oberfläche (35) zumindest eine Diskontinuität (34) aufweist.

2. Elektrisch beheiztes Gefäß (1) nach Anspruch 1, wobei die Dichtung (30) um das Heizelement (20) angeordnet ist, und einen äußeren Umfang (24) des Heizelements (20) im Verhältnis zu einer Innenfläche (13) des Gefäßes (1) abdichtet, indem sie die Innenfläche (13) durch die Auskragung (31) berührt.

3. Elektrisch beheiztes Gefäß (1) nach Anspruch 1, wobei die Auskragung (31) zumindest einen aufgewölbten Bereich (34) aufweist.

4. Elektrisch beheiztes Gefäß (1) nach Anspruch 3, wobei der aufgewölbte Bereich (34) ringförmig ist, und dadurch eine umlaufende Rippe auf der Auskragung (31) bildet.

5. Elektrisch beheiztes Gefäß (1) nach Anspruch 4, wobei die Anzahl der aufgewölbten Bereiche (34) mindestens zwei beträgt.

6. Elektrisch beheiztes Gefäß (1) nach Anspruch 5, wobei die aufgewölbten Bereiche (34) ringförmig sind, und dadurch konzentrische umlaufende Rippen auf der Auskragung (31) bilden.

7. Elektrisch beheiztes Gefäß (1) nach Anspruch 1, wobei die Anzahl der Auskragungen (31) mindestens zwei beträgt.

8. Elektrisch beheiztes Gefäß (1) nach Anspruch 1, wobei die Dichtung (30) an ihrer Innenfläche (32) einen sich verschmälernden Bereich (36) aufweist, und wobei die Dichtung (30) an der Stelle des sich verschmälernden Bereichs (36) elastisches Material umfasst.

## Revendications

1. Récipient chauffé électriquement (1), comprenant un espace de contenant (10) destiné à contenir un liquide, un élément chauffant (20) destinée à fournir de la chaleur à l'espace de contenant (10), et un joint (30), lequel joint (30) est positionné à l'intérieur du récipient (1) pour protéger une partie (2) du récipient (1), qui est présente sur un côté de l'élément chauffant (20) tourné à l'écart de l'espace de contenant (10), de la pénétration d'un liquide à partir de l'espace de contenant (10), et lequel joint (30) a une forme annulaire, et comprend au moins une saillie circonférentielle élastique (31) s'étendant vers l'extérieur, **caractérisé en ce que** la saillie (31) possède au moins une discontinuité (34) dans sa surface (35).

2. Récipient chauffé électriquement (1) selon la revendication 1, dans lequel le joint (30) est fourni autour de l'élément chauffant (20), et scelle une périphérie externe (24) de l'élément chauffant (20) par rapport à une surface interne (13) du récipient (1) par mise en contact de la surface interne (13) à travers la saillie (31).

3. Récipient chauffé électriquement (1) selon la revendication 1, dans lequel la saillie (31) comporte au moins une zone bombée (34).

4. Récipient chauffé électriquement (1) selon la revendication 3, dans lequel la zone bombée (34) est annulaire, ce qui forme une nervure circonférentielle sur la saillie (31).

5. Récipient chauffé électriquement (1) selon la revendication 4, dans lequel le nombre de zones bombées (34) est d'au moins deux.

6. Récipient chauffé électriquement (1) selon la revendication 5, dans lequel les zones bombées (34) sont annulaires, ce qui forme des nervures circonférentielles concentriques sur la saillie (31).

7. Récipient chauffé électriquement (1) selon la revendication 1, dans lequel le nombre de saillies (31) est d'au moins deux.

8. Récipient chauffé électriquement (1) selon la revendication 1, dans lequel le joint (30) possède une zone d'effilement (36) au niveau de sa surface intérieure (32), et dans lequel le joint (30) comprend un matériau élastique à la position de la zone d'effilement (36).
